# EUROPEAN PATENT APPLICATION

(11) **EP 1 435 556 A2**
(43) Date of publication of application: **07.07.2004**
(21) Application number: 03029195.9
(22) Date of filing: 18.12.2003
(51) Int. Cl.: G06F 1/00

(54) **Methods and apparatus for accessing security association information in a cryptography accelerator**

(30) Priority: 18.12.2002 US 434457 P; 24.09.2003 US 669452; 22.09.2003 US 504807 P
(71) Applicant: Broadcom Corporation, Irvine, California 92618-7013 (US)
(72) Inventor: Buer, Mark, 85296 Gilbert AZ (US); Matthews, Donald P., 92618 Irvine CA (US)
(74) Representative: Jehle, Volker Armin, Dipl.-Ing.

(57) **Abstract**

Methods and apparatus are provided for obtaining policy security association information at a cryptography accelerator. Mechanisms are provided for allowing a cryptography accelerator to extract header information and perform operations using header information to acquire policy security association information. The policy security association information can be obtained from a variety of sources including bus controller memory.

## Description

### CROSS-REFERENCE TO RELATED APPLICATIONS

This application claims the benefit of U.S. Provisional Application No. 60/434,745, and U.S. Provisional Application No. 60/434,457, the entireties of which are incorporated by reference for all purposes.

The present application is also related to U.S. Patent Application No. 10/351,258, entitled Methods And Apparatus For Ordering Data In A Cryptography Accelerator, U.S. Patent Application No. 10/350,907, entitled Cryptography Accelerator Input Interface Data Handling, U.S. Patent Application No. 10/350,922, entitled Cryptography Accelerator Data Routing Unit, and U.S. Patent Application No. 10/350,902, entitled Cryptography Accelerator Interface Decoupling From Cryptography Processing Cores, all of which were filed on January 23, 2003, the entireties of which are incorporated by reference for all purposes.

### BACKGROUND

### 1. Field of the Invention.

The present application relates to cryptography accelerators. More specifically, the present application relates to methods and apparatus for data handling in cryptography accelerators.

### 2. Description of Related Art

Conventional cryptography accelerators include a variety of mechanisms for managing the exchange of data with external devices. In many conventional implementations, a processor associated with a cryptography accelerator is required to perform packet processing and pass data or data addresses to the cryptography accelerator. A cryptography accelerator is configured to receive the data and data address information and perform cryptographic processing as directed.

Mechanisms for performing cryptographic operations are described in Applied Cryptography, Bruce Schneier, John Wiley & Sons, Inc. (ISBN 0471128457), incorporated by reference in its entirety for all purposes. However, having an external processor perform packet preprocessing does not free the processor from substantially all cryptographic operations. Consequently, efforts have been directed at freeing a CPU from having to perform cryptographic or cryptographic-related operations. It is desirable to provide further'methods and apparatus for improving data handling and data preprocessing in a cryptography accelerator.

### SUMMARY

Methods and apparatus are provided for obtaining policy security association information at a cryptography accelerator. Mechanisms are provided for allowing a cryptography accelerator to extract header information and perform operations using header information to acquire policy security association information. The policy security association information can be obtained from a variety of sources including bus controller memory.

These and other features and advantages of the present invention will be presented in more detail in the following specification of the invention and the accompanying figures, which illustrate by way of example the principles of the invention.

### BRIEF DESCRIPTION OF THE DRAWINGS

The invention may best be understood by reference to the following description taken in conjunction with the accompanying drawings, which are illustrative of specific embodiments of the present invention.
Figure 1a is a diagrammatic representation of a system that can use the techniques of the present invention.
Figure 1b is a diagrammatic representation of another system that can use the techniques of the present invention.
Figure 2 is a diagrammatic representation of a cryptography accelerator containing processing cores and interfaces.
Figure 3 is a diagrammatic representation of a cryptography accelerator having a data input unit and a data routing unit.
Figure 4 is a diagrammatic representation showing a data input unit.
Figure 5 is a diagrammatic representation showing a pointer buffer list.
Figure 6 is a diagrammatic representation showing a target list.
Figure 7 is a diagrammatic representation showing high level data handling associated with a policy security association lookup unit.
Figure 8 is a diagrammatic showing an address space associated with a cryptography accelerator.
Figure 9 is a flow process diagram showing packet processing at an input interface.
Figure 10 is a flow process diagram showing packet processing at a policy security association lookup unit.
Figure 11 is a diagrammatic representation showing a data routing unit.
Figure 12 is a flow process diagram showing packet processing at an output interface.

### DETAILED DESCRIPTION

The present application relates to implementing a cryptography accelerator. More specifically, the present application relates to methods and apparatus for providing a cryptography accelerator capable of performing secure session operations.

Reference will now be made in detail to some specific embodiments of the invention including the best modes contemplated by the inventors for carrying out the invention. Examples of these specific embodiments are illustrated in the accompanying drawings. While the invention is described in conjunction with these specific embodiments, it will be understood that it is not intended to limit the invention to the described embodiments. On the contrary, it is intended to cover alternatives, modifications, and equivalents as may be included within the spirit and scope of the invention as defined by the appended claims.

For example, the techniques of the present invention will be described in the context of a multiple port cryptography accelerator with multiple cores for performing particular cryptographic operations. However, it should be noted that the techniques of the present invention can be applied to a variety of different chip architectures that perform authentication and encryption operations in general. In the following description, numerous specific details are set forth in order to provide a thorough understanding of the present invention. The present invention may be practiced without some or all of these specific details. In other instances, well known process operations have not been described in detail in order not to unnecessarily obscure the present invention.

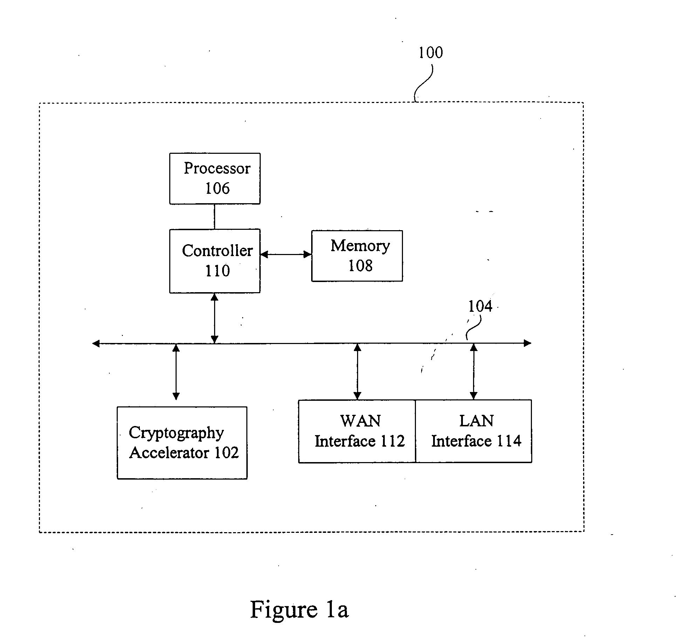

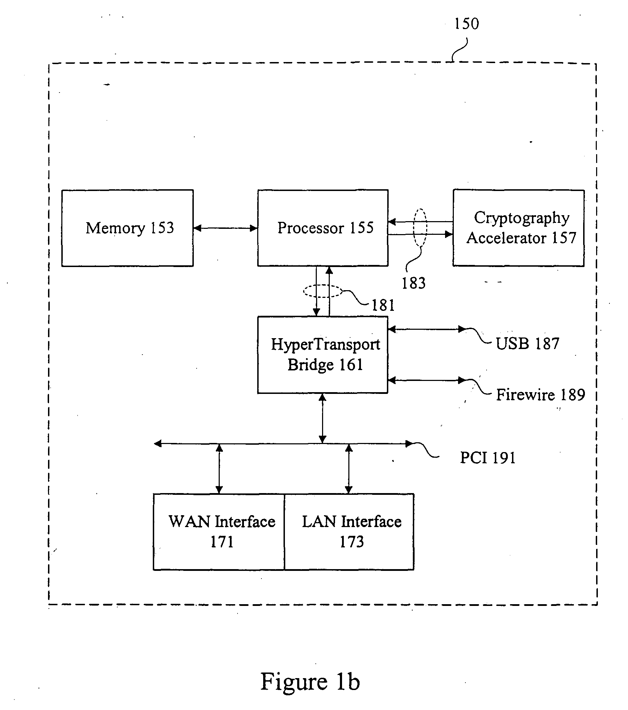

Figure 1a is a diagrammatic representation of one example of a processing system 100 in accordance with an embodiment of the present invention. As shown in Figure 1, the present invention may be implemented in a stand-alone cryptography accelerator 102 or as part of the system 100. Any logic, mechanism, or device operable to perform encryption, decryption, and/or authentication operations is referred to herein as a cryptography accelerator. In the described embodiment, the cryptography accelerator 102 is connected to a bus 104 such as a PCI bus via a standard onchip PCI interface. It should be noted that the bus 104 is usually associated with a bus controller along with bus memory. The processing system 100 includes a processing unit 106 and a system memory unit 108. In typical implementations, the cryptography accelerator 102 includes multiple ports used for communication with external devices such as the processing unit 106 and system memory unit 108. The processing unit 106 and the system memory unit 108 are coupled to the system bus 104 via a bridge and memory controller 110.

Although the processing unit 106 may be the central processing unit (CPU) of a system 100, it does not necessarily have to be the CPU. It can be one of a variety of processors in a multiprocessor system. In one example, a LAN interface 114 is provided to couple the processing system 100 to a local area network (LAN) to allow packet receipt and transmission. Similarly, a Wide Area Network (WAN) interface 112 can also be provided to connect the processing system to a WAN (not shown) such as the Internet. The WAN interface manages in-bound and out-bound packets to allow automatic encryption and authentication processing.

According to various embodiments, the cryptography accelerator 102 is an application specific integrated circuit (ASIC) coupled to the processor 106. The cryptography accelerator 102 can also be a programmable logic device (PLD), field programmable gate array (FPGA), or other device coupled to the processor 106. According to specific embodiments, the cryptography accelerator 102 is implemented either on a card connected to the bus 104 or as a standalone chip integrated in the system 100.

In other embodiments, the cryptography accelerator 102 itself is integrated into the processing core of a CPU of system 100, such as that available from Tensilica Corporation of Santa Clara, California or ARC Cores of San Jose, California. In another embodiment, techniques and mechanisms of the present invention are integrated into a CPU such as a CPU available from Intel Corporation of San Jose, California or AMD Corporation of Sunnyvale, California. By implementing cryptography accelerator functionality entirely on the processor 106, a separate card or chip in the system 100 is not needed. In still other embodiments, the processing system 100 including the cryptography accelerator 102 is implemented as a system on a chip (SOC). The network interfaces, memory, processing core, and cryptography accelerator functionality are provided on a single integrated circuit device.

The cryptography accelerator 102 is capable of implementing various network security standards, such as Internet Protocol Security (IPSec) and Secure Sockets Layer/Transport Layer Security (SSL/TLS), which provide application-transparent encryption and authentication services for network traffic. Network security standards such as SSL/TLS provide authentication through the use of hash algorithms and encryption through the use of encryption algorithms. Two commonly used hash algorithms are MD5 and the Secure Hash algorithm (SHA-1). Other hash algorithms such as MD4 and MD2 are also available. Two commonly used encryption algorithms are DES and RC4. Other encryption algorithms such as triple DES are also available. Authentication and encryption algorithms are described in Applied Cryptography, Bruce Schneier, John Wiley & Sons, Inc. (ISBN 0471128457), incorporated by reference in its entirety for all purposes.

Figure 1b is a diagrammatic representation showing another example of a processing system 150 in accordance with an embodiment of the present invention. In the described embodiment, the cryptography accelerator 157 is connected to a processor 155 through HyperTransport links 183. HyperTransport links are point-to-point links between integrated circuit devices that overcome many of the bandwidth limitations of conventional shared buses. HyperTransport is typically implemented as unidirectional sets of signals. The HyperTransport links each connect two devices, although each device can have multiple HyperTransport links, allowing the construction of large HyperTransport fabrics. In one example, a processor 155 is also connected to system memory 153 such as DDR SDRAM and to a HyperTransport Bridge 161 through HyperTransport links 181. It should be noted that HyperTransport links are associated with HyperTransport memory typically distinct from system memory. The HyperTransport Bridge 161 has USB 187 and Firewire 189 interfaces as well as a PCI bus connection 191 to allowing coupling to WAN interface 171 and LAN interface 173. The processor 155 may also be connected to other processors 159 through HyperTransport links.

HyperTransport is described in the HyperTransport I/O Link Specification, Revision 1.05 (Document #HTC2002104-0005-0001) available from the HyperTransport Technology Consortium of Sunnyvale, CA.

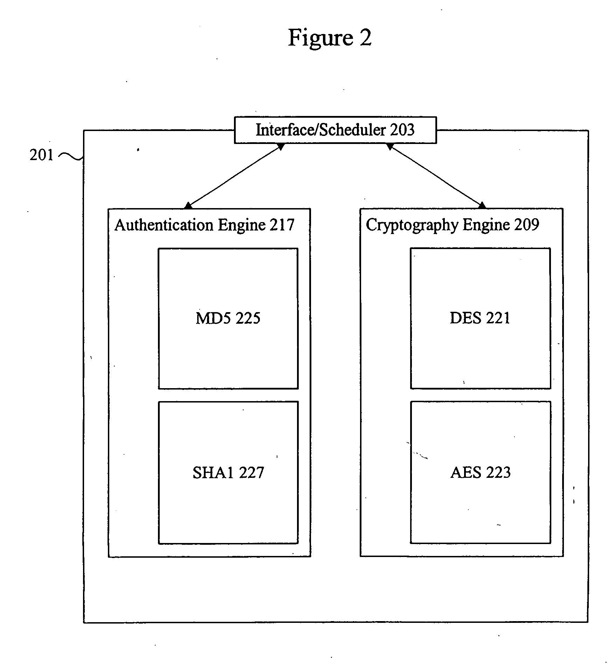

Figure 2 is a diagrammatic representation of one example of a cryptography accelerator 201. The cryptography accelerator 201 includes an input interface 203 connected to a host such as an external processor. According to various embodiments, the interface 203 receives information from the host for processing and sends information to the host when processing is completed. In typical implementations, the input interface include multiple ports (not shown). Each of the different ports may be used to provide a different interface to an external resource such as a host or network card. In one example, port 231 is a streaming interface port configured to allow the input of data streams for processing in the cryptographic processing cores. Port 233 is a Gigabit MAC (media access control) interface configured to receive individual packets.

According to various embodiments, the Gigabit MAC provides packet processing such as collision detection, back pressure, and error detection for received data. In one example, port 235 is a memory mapped port allowing the cryptography accelerator to obtain data from memory associated with the host. Each of the different ports 231, 233, 235, and 237 may include buffers of various sizes. In one example, the buffer size is determined based on the expected packet size. For example, much larger buffers would have to be provided to hold incoming traffic for ports supporting 9k byte packets than for ports that support only 2k byte packets. In conventional implementations, a system designer would estimate optimal buffer sizes for the various ports. However, because each port maintains its own buffer, inefficiencies in buffer allocation can occur. Some port buffers may be underutilized while other ports receiving a large amount of traffic may not have sufficient buffer space.

In typical implementations, small buffers are also provided in data paths associated with cryptographic processing cores 217 and 209. Buffers (not shown) are typically required to store data for various cryptography operations along various data paths. Having a large number of separate, fixed sized buffers leads to inefficiencies in both chip design, cost, and resource allocation. Consequently, the techniques of the present invention provide mechanisms for efficiently allocating a shared memory resource that can be optimized for different ports as well as for data paths associated with cryptographic operations.

The shared resource allows the decoupling of the interface from the various cryptographic processing cores. In one example, shared buffers (not shown) are provided in both input interface 203 and an output interface (not shown). The shared resource can be allocated and reallocated based on the particular specifications of the input and output ports.

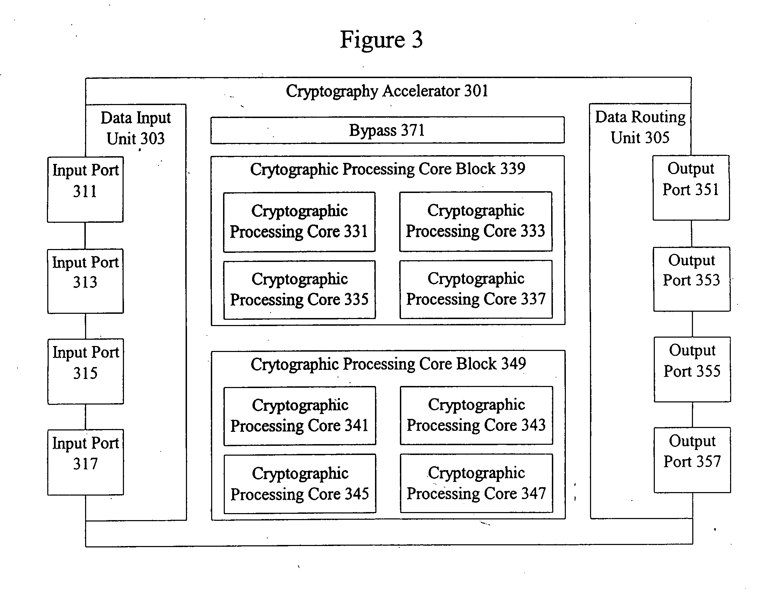

Figure 3 is a diagrammatic representation of one example of a cryptography accelerator having a shared resource. The cryptography accelerator 301 includes a data input unit 303 having multiple input ports 311, 313, 315, and 317. In one example, the data input unit 303 takes data in a round robin fashion from each of the four input ports. The data input unit 303 can then allocate space in a shared resource, here a shared input buffer, for each of the received data blocks. Information associated with the data, such as data length, packet type, start of packet information, end of packet information, and ordering information is also maintained based on the associated input port identified.

Using information associated with the data, the data input unit 303 can then determine how the data should be processed. In one example, the data may require no processing at all, and may be forwarded to a bypass line 371 to allow output of the data from the cryptography accelerator 301 with substantially no cryptographic operations performed on the data. In typical implementations, the cryptography accelerator 102 includes multiple ports used for communication with external devices such as the processing unit 106 and system memory unit 108.

In a similar manner, the data input unit 303 may determine that the data from one of the input ports should be processed using one of the cryptographic processing core data paths 331, 333, 335, 337, 341, 343, 345, and 347. Any mechanism shared by various input ports to buffer and distribute data to various cryptographic processing data paths is referred to herein as a data input unit. According to various embodiments, the data input unit 303 determines whether to forward data to cryptographic processing core blocks 339 or 349 based on load information.

The data input unit 303 is configurable to provide buffering for all the different data has in the device. As noted above, in typical implementations, individual buffers were provided not only for the various ports in a cryptography accelerator, but also for the various data paths in a device. According to various embodiments, a single shared resource is provided in the data input unit to provide for buffering the various ports in the cryptographic accelerator and the various data paths in the cryptography accelerator.

In some embodiments, the cryptography accelerator 301 also includes a data routing unit 305 having multiple output ports 351, 353, 355, and 357. Any mechanism shared by output ports to buffer cryptographically processed data is referred to herein as a data routing unit. According to various embodiments, the data routing unit manages the ordering and delay of the data targeted at the various output ports. In typical embodiments, individual buffers were also associated with each of the various output ports. However, the techniques of the present invention provide a shared resource for the various output ports. According to various embodiments, the various ports are not configured with fixed size buffers and each of the ports can be modified to accommodate different types of traffic based on user needs. In one example, a particular output port may be configured to handle large size packets by allocating more buffer space in the data routing unit shared resource to that particular port.

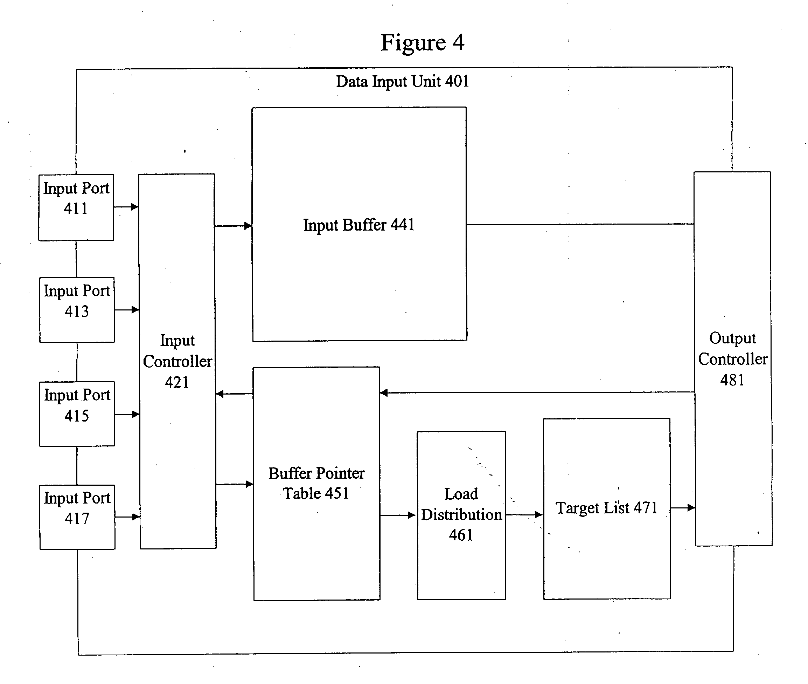

Figure 4 is a diagrammatic representation showing more detail on one example of a data input unit 401. Data input unit 401 includes input ports 411, 413, 415, and 417. In one embodiment, the input controller 421 takes data from each of the four input ports in round robin fashion. The input controller 421 determines if any input buffer space is available for a particular port. In one example, input controller 421 determines if buffer space is available in input buffer 441 by examining buffer pointer table 451. Buffer pointer table 451 includes a list of pointers each associated with a block of memory in input buffer 441. In one instance, each pointer in the buffer pointer table 451 references a 128 byte chunk of memory in the input buffer 441. Consequently, it should be noted that the input buffer 441 does not have to be physically divided amongst the input ports in order to dynamically allocate buffer space for each of the various input ports. Although physically allocating the input buffer 441 to the various input ports is one possible mechanism for providing an allocable shared resource, the techniques of the present invention also provide for allocation of pointers to the input buffer 441.

According to various embodiments, blocks of pointers in the buffer pointer table 451 are allocated to the various input ports. The input controller 421 determines if any pointer associated with the input port is available. If a pointer associated with the input port is free or available, the data in the input port is forwarded to input buffer 441 and the pointer is assigned to the data block. In one implementation, an entry in the buffer pointer table 451 lists the free pointers available and their associated input ports. In another implementation, each entry is associated with a flag indicating if the pointer is being used and what port the pointer is associated with. If no pointers associated with the input port or available, the input controller does not hold data from the input port, as all buffer space allocated to the input port has been consumed. Any mechanism for tracking data blocks in a shared resource where the data blocks are destined for cryptographic processing is referred to herein as a buffer pointer table. Any mechanism for allocating the pointers in the buffer pointer table to various data blocks is referred to herein as an input controller 421.

When the input controller 421 has assigned data pointers from the buffer pointer table 451, a load distribution unit 461 can select data from the buffer pointer table entries. The order for all data on a particular port is maintained since the load distribution unit can be configured to select data in order from a single buffer pointer table 451. According to various embodiments, load distribution unit 461 can select data referenced by the buffer pointer table 451 using a variety of mechanisms. In one example, the load distribution unit 461 selects data from ports that have consumed all allocated buffer space. The load distribution unit can also select data entries if the data entries are entire packets. In another example, load distribution unit can select data in round-robin fashion. The load distribution unit may also be configured to identify data associated with cryptographic processing.

As will be appreciated, a data destined for cryptographic processing is often processed based on information associated with the data block. In one example, a data block is processed after obtaining security association information associated with the data block. The security association information includes keys such as session keys, initialization vectors, and the particular algorithms needed to process the data. Security association data is often determined using combinations of source and destination addresses and source and destination port numbers. For example, a packet with a source of A and a destination of B may be determined to need triple DES processing, MD5 authentication, and a session key available to the cryptographic processing core from a particular memory address. The load distribution unit 461 identifies information needed for cryptographic processing of the data and provides a pointer to the information. In many instances, the pointer is a pointer to the header of a packet stored in the input buffer 441.

According to various embodiments, the load distribution unit 461 passes information to target list 471. In one example, target list 471 includes multiple lists, each list associated with a particular data path. One list may be associated with bypass data that should be passed through the cryptography accelerator substantially without processing. Other lists may be associated with public key operation data paths. In one example, a modular exponentiation unit list is provided for performing modulus operations on data in the input buffer 441. Still other lists include pointers to data blocks in buffer memory 441 requiring processing by one of the cryptographic accelerator cores. The data pointer lists are associated with a header pointer list that identifies how to derive information such as security association information for processing the data corresponding to the pointers in the,data pointer list. The output controller 481 is responsible for forwarding data associated with the pointers in the target list to the various data paths. Typically, data associated with each of the lists in the target list 471 is pulled in round-robin fashion. In one example data associated with each list gets the same amount of bandwidth out of the input buffer 441.

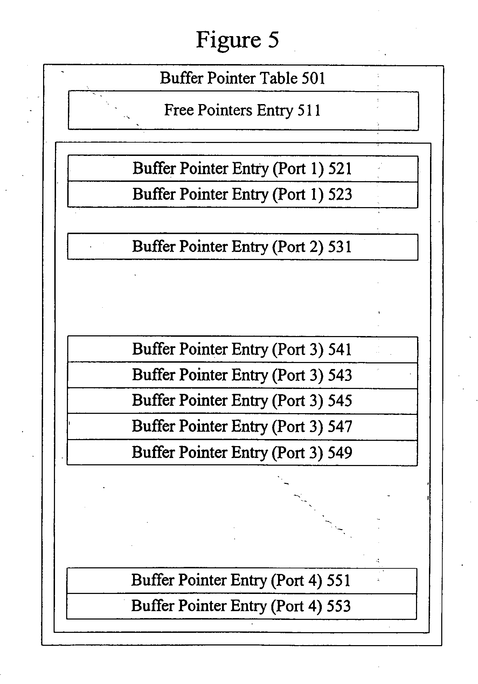

The input buffer allows storage of information for use in various cryptographic operations as well as the allocation of memory to various ports as provided by the buffer pointer table 451. Figure 5 is a diagrammatic representation, of a buffer pointer table 501. According to various embodiments, the buffer pointer table 501 includes a free pointers entry 511 listing the available free pointers associated with free blocks in the input buffer memory. In one example, blocks of pointers are allocated to each of the various ports in the data input unit. For example, buffer pointer entry 521 and 523 are associated with port one. Buffer pointer entry 531 is associated with port two. Buffer pointer entries 541, 543, 545, 547, and 549 are associated with port three. Buffer pointer entries 551 and 553 are associated with port 4. As long as free pointers are available for a particular port, an input controller can continue to pull data from the particular port, store the data in input buffer memory, and assign an available pointer associated with the port to the data block. However, when no free pointers are available for a particular port, the input controller no longer pulls data from that port. The port is blocked until space is made available in the input buffer as represented by the buffer pointer table.

It should be noted that much of the load distribution processing and the data path decision processing is performed using pointers to blocks of memory in the input buffer. In a cryptography processing context, this provides important benefits including the capability to process data and associated security association information along data paths where the data paths can be implemented substantially without data path buffers.

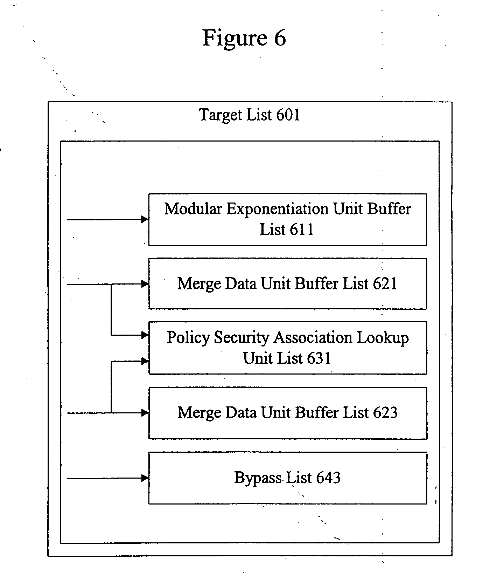

Figure 6 is a diagrammatic representation of a target list. According to various embodiments, target list 601 includes multiple lists associated with various data paths. In one example, target list 601 includes a bypass list 643 associated with data to be passed through the cryptography accelerator without cryptographic processing. A modular exponentiation buffer list 611 is provided for public key processing of data. According to various embodiments, merge data unit buffer list 621 and merge data unit buffer list 623 are provided for data to be forwarded to cryptographic processing cores. Merge data unit buffer list 621 and 623 are associated with pointers to data that will be merged with security association information before cryptographic processing is performed.

Consequently, merge data unit buffer lists 621 and 623 are linked to policy security association lookup unit header list 631. When a pointer is provided to merge data unit buffer list 621, a pointer is also provided to policy security association lookup unit header list 631. The merge data unit buffer list 621 pointer allows later combination of data with security association information extracted from a policy security association lookup unit. When the data is combined with the security association information, the data can be processed using one of a number of cryptographic processing cores.

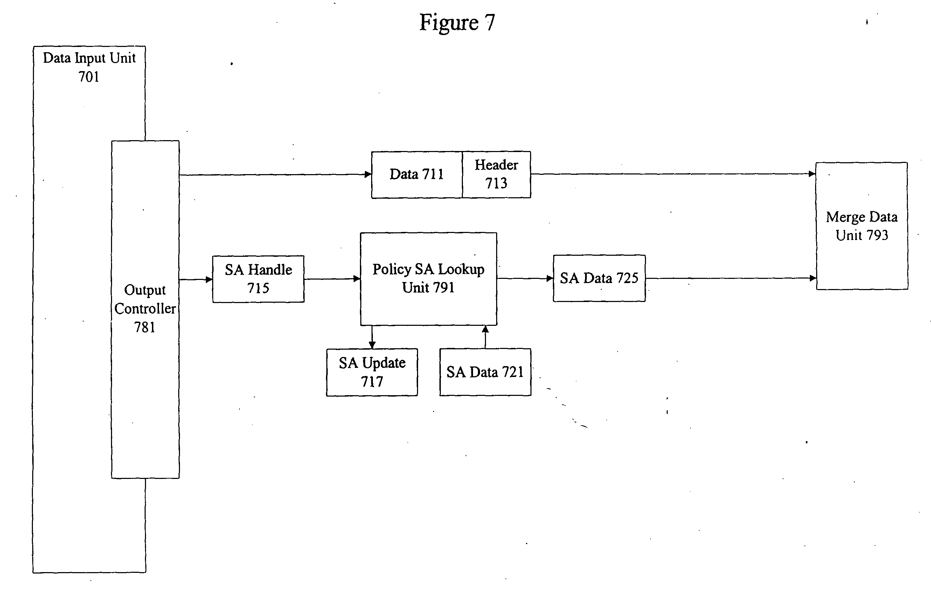

Figure 7 is a diagrammatic representation of data passed to a merge data unit. According to various embodiments, the output controller 781 associated with the data input unit 701 provides data 711 and header 713 to a merge data unit 793. However, before the data 711 and header 713 can be processed using one of a number of cryptographic processing cores, the data typically is combined with security association information. According to various embodiments, the security association information is derived by a policy security association lookup unit. According to various embodiments, the policy security association lookup unit issues read requests to bus controller memory, system memory, or onchip memory to acquire security association information. The policy security association lookup unit then takes the information from memory and prepends information to data 711 and header 713.

The location in memory of the security association data structure can be specified directly or by identifiers passed by the output controller 781. In one example, the security association lookup unit can derive a security association address using header information and retrieve the information corresponding to the address. In another example the output controller 781 passes a security association handle 715 to the policy security association lookup unit 791. Logic and mechanisms for determining security association addresses and retrieving security association information from memory is collectively referred to herein as a policy security association lookup unit.

In one example, the policy security association lookup unit 791 uses the information in the security association handle 715 to identify security association information. The information identified can be used for both inbound and outbound packets to allow the packets to be classified into flows. In one instance, the security association handle 715 includes up to 2k of the header of the associated packet. The policy security association lookup unit then issues a security association update 717 to modify data such as sequence numbers associated with a flow.

The policy security association lookup unit 791 acquires security association data 721 and passes the security association data 725 to a merge data unit 793. The merge data unit 793 combines the security association data 723 with the data 711 and header 713. It should be noted that the policy security association lookup unit processing may vary depending on whether the packet is an inbound packet or an outbound packet. For an outbound packet, the policy security association lookup unit may also be responsible for determining header information such as outer IP header information. For an inbound packet, the outer IP header information is included in the data 711 and header information 713. Various types of error checking can also be performed by the policy security association lookup unit 791 to determine that the flow referenced by a security association handle 715 is a valid one.

It should be noted that each merge data unit 793 can then pass the combined data to one of multiple cryptography processing core data paths. In one example, two merge data units are provided in a cryptography accelerator having a data input unit and eight processing cores. The two merge data units are also associated with a single policy security association lookup unit. Each merge data is coupled to four cryptographic cores. In some examples, each merge data unit would select one of the four cryptographic processing cores to handle data based on load.

The policy security association lookup unit 791 can acquire security association information in a variety of different manners. In many conventional implementations, an external entity such as a system CPU would pass a security association handle to the cryptography accelerator. The security association handle typically would be a system memory address that the cryptography accelerator could use to retrieve the security association information. The cryptography accelerator could use various data path buffers to temporarily hold data while security association information was being retrieved from a system memory for cryptographic processing. However, having an external entity such as a system CPU pass the security association handle to the cryptography accelerator entails that the CPU perform security related processing to derive the security association handle. The processing may involve performing some operation using the source and destination addresses, source and destination ports, etc. Similarly, some other implementations entail that the CPU not only perform some cryptographic processing, but that the CPU also pass the security association information itself to the cryptography accelerator.

The security association information is stored in onchip memory, a valuable resource on the cryptography accelerator. Although storing the security association information in onchip memory allows effective and efficient access to the security association information by the cryptography accelerator, onchip memory is a relatively expensive resource. Furthermore, having an external CPU perform a substantial amount of processing and message passing does not free the CPU from cryptographic processing operations. Consequently, the techniques of the present invention allow a cryptography accelerator to independently derive security association information handles and obtain the security association information not only from system memory or from onchip memory, but also from bus memory such as memory associated with a PCI bus controller or a HyperTransport link. In one embodiment, techniques of the present invention allow a security association lookup unit to acquire security association information from an address space including bus controller memory, random access memory, and onchip memory.

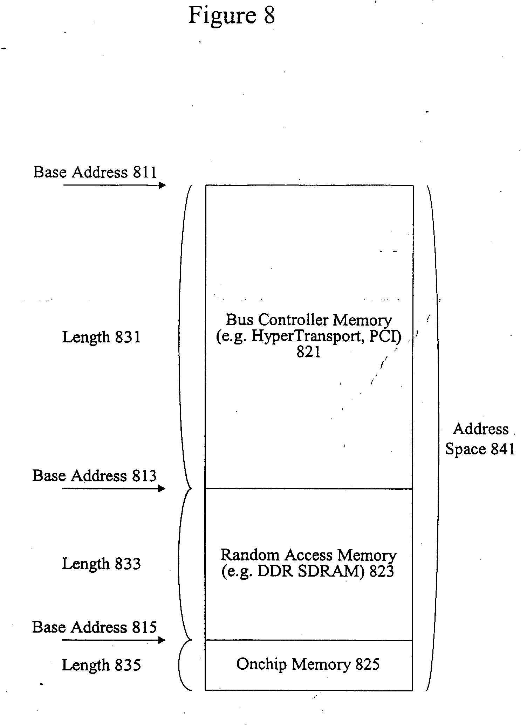

Figure 8 is a diagrammatic representation showing an address space 841 associated with the cryptography accelerator. Address space 841 includes a bus controller memory 821 with a base address 811 and a length 831. Bus controller memory can be memory associated with a PCI bus controller or memory associated with various HyperTransport links. Any memory associated with a mechanism interconnecting devices in a computer system is referred to herein as bus memory or bus controller memory. The address space 841 of the cryptography accelerator also includes addresses corresponding to random access memory addresses 823. Random access memory portion 823 has a base address 813 and a length 833. Random access memory such as double data rate (DDR) SDRAM typically is associated with various CPUs. The address space 841 also includes addresses allocated for onchip memory 825. Onchip memory 825 has a base address 815 and length 835. In some examples, addresses in different types of memory can be referred to as addresses on different channels. For instance, bus controller memory can be referred to as channel 0, system memory as channel 1, and onchip memory as channel 2.

In many implementations, the time taken to access bus controller memory 821 is substantially greater than the time taken to access random access memory 823 or an onchip memory 825. In one example, the time taken to access bus controller memory 821 is approximately 200 to 300 ns while the time taken to access random access memory 823 is approximately 50-100 ns. On the other hand, the time taken to access onchip memory 821 is less than 1 ns. Because time taken to access bus controller memory is substantially greater than the time taken to access other forms of memory, security association information is typically held in random access memory or in onchip memory. Nonetheless, the techniques of the present invention recognize that there are benefits to allowing the retrieval of security association information from bus controller memory 821.

In many instances, accessing bus controller memory 821 does not require that a CPU perform as much preprocessing on a packet. In some instances, a CPU performs zero processing on a packet and the cryptography accelerator is still able to obtain security association information on the packet. By allowing a cryptography accelerator to access bus controller memory, cryptography accelerator can more easily read data from network interfaces without intervention from a system CPU.

In many conventional implementations, a bus controller memory access time that is substantially greater than random access memory access time or onchip memory access times is highly undesirable. In a single data path cryptography accelerator, not only would be access to the bus controller memory slow cryptographic processing, but a relatively large buffer would also have to be included the hold data associated with the security association information along with any other data received by the cryptography accelerator. However, according to various embodiments of the present invention, a number of cryptographic processing blocks and cryptographic processing cores are provided. Instead of providing large buffers associated with each cryptographic processing core or each cryptographic processing core block, a single shared buffer is provided to hold data associated with the security association information being retrieved.

Because the data buffer is shared, retrieval of security association information from the bus controller memory with a relatively long access time does not stall cryptographic processing on any one given cryptographic processing data path. Furthermore, processing on other cryptographic processing data paths can proceed normally. Techniques are also provided to allow access of security association information from different types of memory for various processing flows. The shared buffer of the present invention along with the ordering schemes allow access times for security association information to vary widely without disrupting cryptographic processing of the associated data.

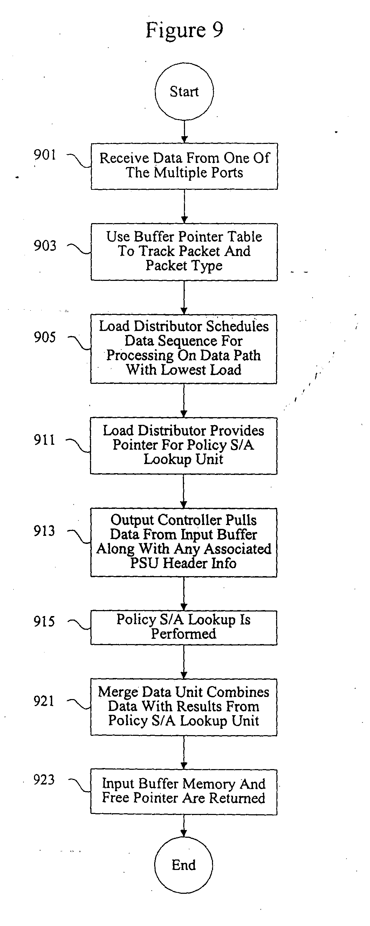

Figure 9 is a flow process diagram showing data handling in the cryptography accelerator. At 901, data is received from one of any number of input ports associated with the cryptography accelerator. As noted above, each port may be configured to handle different types of traffic such as streaming, packet, large packet, or memory mapped data. In many instances, the packet is received without any preprocessing such as security association information retrieval processing. At 903, a buffer pointer table is used to track the packet and the packet type. It should be noted that data is typically pulled in round-robin fashion from one of the input ports as long as free pointers are available in the buffer pointer table. According to various embodiments, blocks of pointers are allocated to each of the input ports. In this manner, the system designer can allocate input buffer memory associated with the pointers to each of the various input ports based on the needs and requirements of each port or the corresponding traffic. At 905, the load distributor schedules the data sequence for processing on a data path having the lowest load.

According to various embodiments, the load distributor schedules data sequences by scheduling the pointers in the buffer pointer table. At 911, the load distributor provides a pointer to a policy security association lookup unit list. It should be noted that some data sequences may require no cryptographic core processing and may instead be provided to a bypass list or a public key processing list. At 913, the output controller pulls data from the input buffer along with any associated policy security association lookup unit header information. The output controller pulls data from the input buffer based on pointers provided in a target list. At 915, the policy security association lookup is performed using information such as header information associated with the data sequence. The policy security association information can be retrieved from bus controller memory, system memory, or onchip memory. At 921, a merge data unit combines the data sequence with the results of a policy security association lookup. At 923, input buffer memory and any associated free pointers are returned.

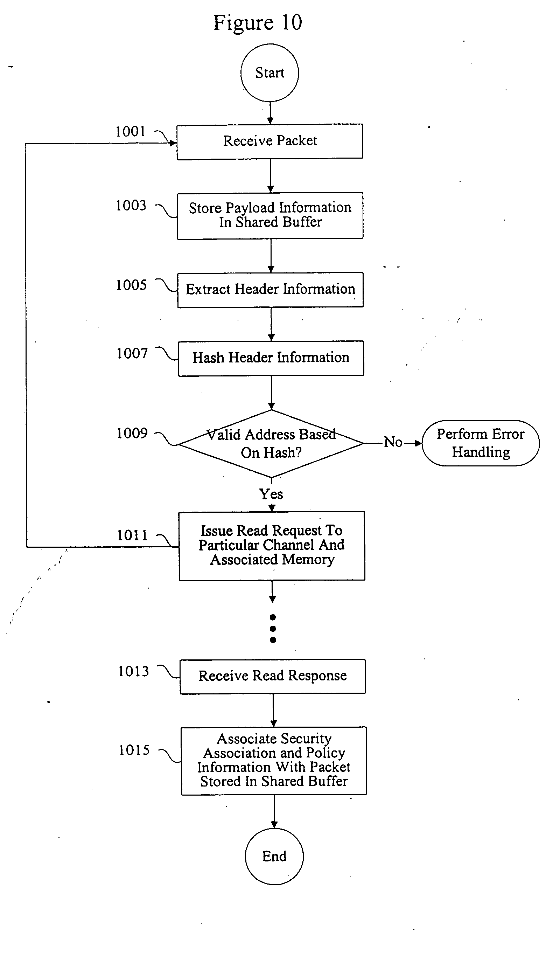

Figure 10 is a flow process diagram showing one example of policy security association information retrieval. At 1001, a packet is received from an external entity, such as in a manner shown in Figure 9. At 1003, payload information such as the data associated with a packet is stored in a shared buffer. At 1005, header information is extracted. In many instances, header information such a source addresses, security parameter index (SPI), destination addresses, port numbers, protocol information, etc. are stored in the shared buffer in the data input unit. A SPI is an identifier for a security association, relative to some security protocol. A SPI pair may uniquely identify an SA. The uniqueness of the SPI is implementation dependent, but could be based per system, per protocol, or other options. Parameters such as SPI are described in RFC 2408, the entirety of which is incorporated by reference for all purposes. At 1007, an operation is performed on various fields such as header fields in order to derive a security association information address. In one example, a hash of the source addresses, destination address, SPI, port numbers, and protocol is performed in order to determine some intermediate data. In some examples, the memory map is then referenced based on the results of a hash in order to acquire an address in the address space of the cryptography accelerator.

If no valid address is obtained at 1009, error handling is performed. In many instances, if no security association address can be obtained, the packet data and header information are passed through the cryptography accelerator substantially without processing. In other examples, default parameters can be used when security association information cannot be obtained. If the valid address can be obtained based on a hash and any associated memory map, a read request to a particular channel and the corresponding portion of the address space is issued at 1011. In one example, a read request to a bus controller memory is made. In current implementations, a bus controller memory read request entails an access time approximately 200 to 300 ns, substantially greater than a delay associated with onchip or system memory.

The delay can be handled due to the shared data buffer. The shared data buffer allows substantial and inconsistent delay in processing of data associated with a particular data path without blocking processing on other cryptographic processing data paths or requiring large data buffers for each processing data path. After a read request is issued at 1011, additional processing on subsequent packets can be performed. At 1013, a read response is received. At 1015, policy security association information is associated with the packet data stored in the shared buffer. In some examples, the association is performed by using a merge data unit 793 as shown in Figure 7.

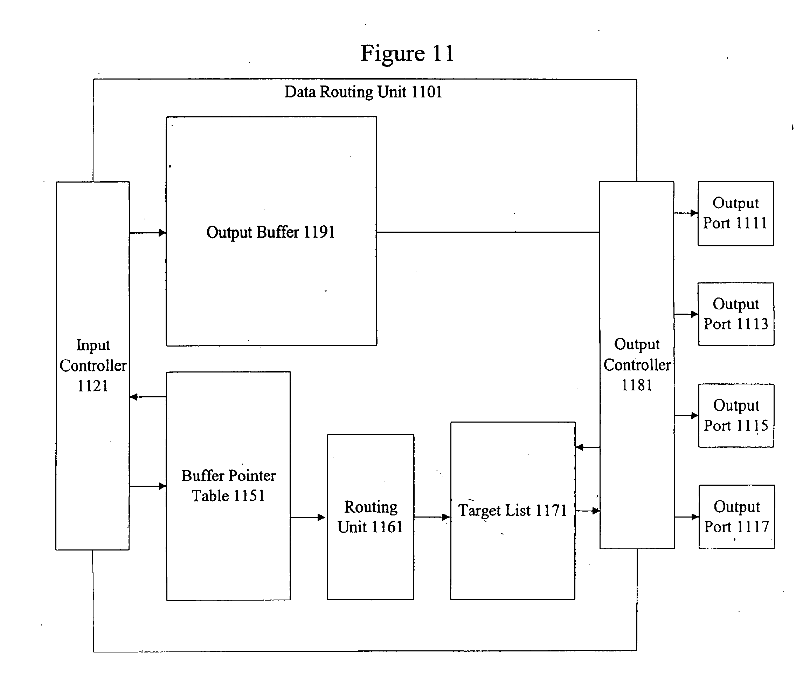

Figure 11 is a diagrammatic representation of a data routing unit 1101. As noted above, the data input unit provides the input interface for a cryptography accelerator while the data routing unit provides the output interface for the cryptography accelerator. According to various embodiments, the data routing unit manages the ordering of cryptographically processed data for the various egress output ports. The input controller 1121 is coupled to a variety of data paths such as bypass, public key processing, and cryptographic core processing data paths. According to various embodiments, data blocks in a data sequence may be received out of order by an input controller as several data paths may be associated with cryptographic processing cores. For example, blocks 1, 2, and 4 may be received through a first data path and blocks 3 and 5 may be received through a second data path. The data routing unit is configured to order the data blocks and provide them to the appropriate output port.

According to various embodiments, the input controller 1121 writes data blocks to buffer memory and data block pointers to a buffer pointer table 1151 in the order that the input controller receives them. In one example, pointers to blocks 1, 2, and 4 may be placed into a first port buffer list while pointers to blocks 3 and 5 may be placed in a second port buffer list. A routing unit 1161 recognizes the ordering and pulls pointers in order and places the pointers in the target list 1171. In many implementations, the target list 1171 includes lists of pointers each associated with the various output ports. In one example, lists of pointers are provided in target list 1171. In one example, four lists of pointers correspond to output ports 1111, 1113, 1115, and 1117. Each pointer in the target list 1171 corresponds to a block in output buffer 1191. It should be noted that in the data input unit, the pointers in the buffer pointer table are allocable to the various input ports based on the particular needs and requirements of the input ports.

In the data routing unit, however, the pointers in the target list 1171 are allocable to the various output ports based upon the needs and requirements of the various output ports. In one example, output port 1111 may be configured to support large packets. Consequently, a large percentage of output buffer memory manager 1191 may be allocated to output port 1111. In one example, the routing unit 1161 would pull a first block pointer associated with a flow and place the pointer into a buffer list associated with a Gigabit MAC output port. The routing unit 1161 would not pull another block from that particular flow until the second block pointer is pulled. In this manner, the routing unit 1161 can pull data blocks in order from the buffer pointer table even if the blocks of data came from different data paths in the cryptographic accelerator.

It should be noted that although the blocks on a particular data path will typically be in order, the blocks received from multiple data paths by the input controller will not necessarily be in order. That is, blocks 3 and 5 in a sequence may be received along a data path before blocks 1, 2 and 4 are received from another data path. The routing unit 1161 pulls pointers to data blocks in order from the buffer pointer table and places them in an output port list in the target list 1171. The output controller 1181 uses the pointers in the target list 1171 to identify data blocks in the output buffer 1191 to forward to the output ports.

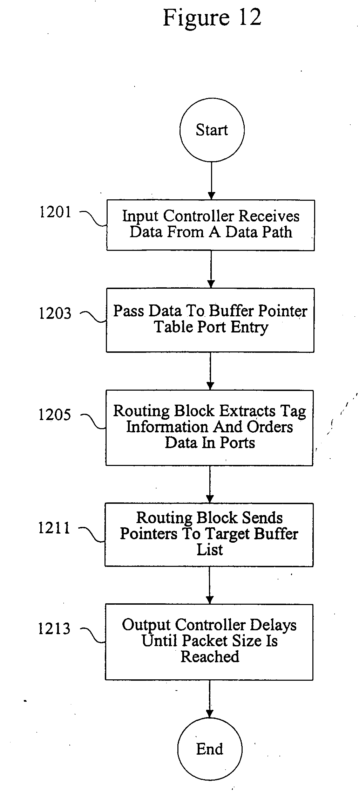

Figure 12 is a flow process diagram showing data handling at an output interface associated with the cryptography accelerator. At 1201, input controller receives data from a data path. At 1203, data is written to the output buffer 1191 and the pointer is written to the buffer pointer table 1151. The routing unit 1161 pulls data blocks in order from the buffer pointer table 1151 at 1205. At 1211, the routing block forwards the pointers to the target buffer list upon determining that pointers are available in the target list. At 1213, the output controller may immediately forward data associated with the pointers in the target list or may wait until a packet size is reached before forwarding data out through a particular port.

While the invention has been particularly shown and described with reference to specific embodiments thereof, it will be understood by those skilled in the art that changes in the form and details of the disclosed embodiments may be made without departing from the spirit or scope of the invention. It is therefore intended that the invention be interpreted to include all variations and equivalents that fall within the true spirit and scope of the present invention.

## Claims

1. A cryptography accelerator, comprising:
an input port configured to receive a data sequence comprising header information and payload information from an entity external to the cryptography accelerator;
a shared input buffer associated with a plurality of input ports, the shared input buffer configured to hold payload information associated with the data received by the plurality of input ports; and
a security association lookup unit configured to identify a security association address in a first portion of the address space associated with the . cryptography accelerator by using header information, the first portion of the address space corresponding to bus controller memory,
wherein the security association lookup unit is operable to acquire the security association information from bus controller memory.

2. The cryptography accelerator of claim 1, wherein the security association lookup unit identifies the security association address using header information associated with the received data sequence.

3. The cryptography accelerator of claim 2, wherein the security association lookup unit identifies the security association address by performing a hash on the header information.

4. The cryptography accelerator of claim 2, wherein the security association lookup unit identifies the security association address by performing a hash using a source address, a destination address, a SPI, a source port number, and a destination port number.

5. The cryptography accelerator of claim 4, wherein the hash further uses protocol information and a version number.

6. The cryptography accelerator of claim 1, wherein the first portion of the address space is a HyperTransport address space.

7. The cryptography accelerator of claim 1, wherein the first portion of the address space is a Peripheral Components Interface (PCI) address space.

8. The cryptography accelerator of claim 7, wherein a second portion of the address space corresponds to a system memory address space, the random access memory coupled to a CPU external to the cryptography accelerator.

9. The cryptography accelerator of claim 8, wherein a third portion of the address space corresponds to onchip memory.

10. The cryptography accelerator of claim 9, wherein obtaining security association information from a bus memory entails more delay than obtaining security association information from system memory which entails more delay than obtaining security association information from onchip memory.

11. The cryptography accelerator of claim 10, wherein delay associated with obtaining security association information is managed by holding payload information in the shared buffer.
